# EUROPÄISCHE PATENTSCHRIFT

(11) **EP 1 896 211 B1**
(45) Veröffentlichungstag und Bekanntmachung des Hinweises auf die Patenterteilung: **17.07.2013**
(21) Anmeldenummer: 06741042.3
(22) Anmeldetag: 16.06.2006
(51) Int. Cl.: B23D 77/02

(54) **REIBAHLE MIT SCHNEIDPLATTE**
REAMER COMPRISING A CUTTING PLATE
ALESOIR A PLAQUETTE DE COUPE

(30) Priorität: 24.06.2005 AT 10692005
(43) Veröffentlichungstag der Anmeldung: 12.03.2008
(73) Patentinhaber: MAPAL Fabrik für Präzisionswerkzeuge Dr. Kress KG, D-73431 Aalen (DE)
(72) Erfinder: BÄRNTHALER, Walter, A-8644 Mürzhofen (AT); SCHLEMMER, Armin, A-8600 Oberaich (AT); RUETZ - UDIER, Klaus, A-8043 Graz (AT)
(74) Vertreter: Gleiss, Alf-Olav
(86) Internationale Anmeldenummer: PCT/AT2006/000246
(87) Internationale Veröffentlichungsnummer: WO 2006/135946

(56) Entgegenhaltungen:
- EP-A- 0 631 834
- EP-A- 1 160 042
- US-A- 5 722 803
- US-A- 6 161 990
- US-A1- 2004 265 075

## Beschreibung

Die Erfindung betrifft eine Reibahle, bestehend aus einem Schaft mit einerseits einem Einspannteil und in Achsrichtung desselben gegenüberliegend einen Arbeitsbereich mit mindestens einem auswechselbaren Werkzeugteil und mindestens einem dieses festlegenden Druckkörper, wobei das Werkzeugteil als Hartmetall-Schneidplatte mit einer Länge von bis zu 25 mm, mit einer Breite von bis zu 8 mm und einer Höhe bzw. Dicke von bis zu etwa 4 mm insbesondere als Wendeschneidplatte gebildet ist, welche Schneidplatte in Längsrichtung im Querschnitt ein Profil mit einer ebenen Auflagefläche, jeweils einer zumindest eine Hauptschneidkante und eine Nebenschneide bildenden Freifläche, einer Spanfläche und einer im Wesentlichen konkaven Druckfläche für ein Spannelement aufweist, und in Draufsicht eine zur Spanung einsetzbare im Wesentlichen parallel zur Schaftachse ausrichtbare Nebenschneidkante, die in Vorschubrichtung der Reibahle endenseitig einen zur Schaftachse gewinkelten Anschnitt mit mindestens einer Hauptschneidkante besitzt.

In der Zerspanungstechnik sind für ein Drehen, Schälen, Hobeln, Fräsen, Bohren und dergleichen eine Vielzahl von Wendeschneidplatten bekannt geworden, welche in einem Werkzeug eine möglichst hohe Abspanleistung bei einer vorteilhaften Ausbildung der Späne und deren Entfernung desselben vom Abspanbereich bewerkstelligen sollen. Dabei steht, wie vorher erwähnt, die Abspanleistung als Zielgröße vorrangig fest, wobei die anfallenden im Wesentlichen groben Späne mittels Verformung durch Spanleitmitteln der Schneidplatten gegebenenfalls gebrochen und/oder für einen raschen zielgerichteten Austrag aufbereitet werden.

Bei einem Reiben werden auf Untermaß vorgeformte Löcher auf eine hochpräzise Dimension geringfügig aufgeweitet, um eine maßgenaue Passung von Bauteilen zu erreichen bzw. sicherzustellen.

Reibahlen sind Werkzeuge zur Feinbearbeitung von Bohrungsoberflächen, wobei die Bohrungen als Sack oder als Durchgangslöcher ausgeführt sein können, und sind zumeist aus einem Einspannteil und einem Werkzeugteil mit mindestens einer Messerplatte gebildet. Die Messerplatten besitzen mindestens eine Hauptschneide, die aus mehreren Teilen ausgeformt sein kann und mindestens eine Nebenschneide.

Bei einer Feinbearbeitung von Oberflächen, insbesondere beim Reibbearbeiten von Bohrungen, herrschen im Vergleich mit einer leistungsorientierten Spanabnahme von Werkstücken naturgemäß wesentlich unterschiedliche Gegebenheiten hinsichtlich mit Vorteil einsetzbaren Schneidplattenform sowie einer Spanausbildung, jedoch beeinflusst die Art sowie die Form und der Fluss der abgenommenen feinen Späne auch beim Reiben wesentlich die erreichbare Güte von Bohrungsflächen und die Haltbarkeit des Werkzeuges im hohen Maße.

Reibahlen nach dem Stand der Technik werden mit unterschiedlich ausgerichteten Haupt- und Nebenschneiden ausgestattet.

Aus der EP 1 160 042 ist beispielsweise gemäß dem Oberbegriff der Ansprüche 1 oder 2 bekannt, eine die Spanfläche, den Schneiden gegenüberliegend, im Bereich der Hauptschneide und der Nebenschneide durchgehend mit einer Spanleitstufe zu begrenzen, wobei die Spanleitstufe im Bereich der Hauptschneide ansteigt bzw. einen abnehmenden Abstand zur Hauptschneide aufweist. Es wird die Ansicht vertreten, dass die Hauptschneide der Vorbearbeitung und die Nebenschneide einer Feinbearbeitung dient und die von den Schneiden abgetragenen Späne an einer vorzugsweise geraden Spanleitstufe anstoßen und gebrochen werden, sowie einen Bewegungsimpuls in einer Richtung erhalten, der durch die Neigung der Spanleitstufe gegeben ist.

Eine Messerplatte für eine Reibahle zur Feinbearbeitung von metallischen Werkstücken mit einer Haupt- und einer Nebenschneide sowie einer an diese Schneiden heranreichenden Spanfläche und mit einer diese begrenzende Spanleitstufe offenbart die EP 0 631 834 B1. Um kurze Späne bei einer Feinbearbeitung zu erreichen, ist dabei vorgesehen, dass die Spanleitstufe am Scheitelpunkt der Schneiden einen Hochpunkt aufweist, von dem jeweils die Spanleitstufe im Bereich der Hauptschneide abfällt und im Bereich der Nebenschneide parallel zu dieser oder ebenfalls abfallend ausgebildet ist.

Alle Schneidplatten für Reibahlen nach dem Stand der Technik haben jedoch den Nachteil gemeinsam, dass die ebenen Spanflächen der Haupt- und der Nebenschneide der Schneiden gegenüberliegend Spanleitstufen aufweisen, welche die Späne insbesondere im Bereich der Nebenschneide sammeln können, wodurch es bei vermehrter Spanabnahme bedingt durch einen Spanstau zu höheren Reibwerten mit einer Erwärmung und mit verminderter Oberflächengüte bei der Feinbearbeitung des Werkstückes kommen kann.

Hier will die Erfindung die Nachteile überwinden und setzt sich zum Ziel, eine Reibahle der eingangs genannten Art zu schaffen, bei welcher die Hartmetallschneidplatte im Bereich der Hauptschneide einen Kurzspananfall sicherstellt und im Bereich der Nebenschneide, in welcher hauptsächlich ein Glätten der Bohrungsoberfläche mit äußerst geringer feiner Spanabnahme erfolgt, ein Spanstau vermieden wird.

Dieses Ziel wird gemäß dem Anspruch 1 dadurch erreicht, dass die Spanfläche der Schneidplatte in einem Abstand von mindestens 0,02 mm von der Schneidkante endenseitig im Bereich vom Anschnitt zumindest teilweise eine um mindestens 0,01 mm vergrößerte Rautiefe aufweist.

Die nach der Erfindung erzielten Vorteile sind im Wesentlichen darin zu sehen, dass ausschließlich im Anschnitt in einem Abstand von der Schneidkante die Spanfläche eine vergrößerte Rautiefe aufweist, wodurch der ablaufende Span aufgrund einer erhöhten Reibung eine Stauchung erfährt und somit ein Spanbruch initiiert wird. Die gebrochenen Späne können, weil im Bereich der Nebenschneide keine erhöhte Rauhigkeit der Spanfläche gegeben ist, leicht die Bohrung verlassen.

Das vorstehend genannte Ziel wird nach der Erfindung gemäß Anspruch 2 auch dadurch erreicht, dass die Schneidplatte in deren Spanfläche in einem Abstand von mindestens 0,02 mm von der Hauptschneidkante endenseitig im Bereich vom Anschnitt zumindest eine Spanmulde aufweist.

Überraschend konnten bei einer Feinbearbeitung mit einer Schneidplatte in geringe Teillänge gebrochene Späne, die unbehindert austragbar sind, erreicht werden, wenn erfindungsgemäß nur im Anschnitt, also im Bereich der Hauptschneide, in welcher bei einem Reiben bzw. einem Feinbearbeiten einer Bohrung der überwiegende Teil der Späne gebildet wird, zur Schneidkante beabstandet in die Spanfläche einer Spanmulde eingebracht ist. Einerseits wirkt der Spanflächenbereich vor der Spanmulde durch einen vergrößerten Schneidwinkel Standzeiterhöhend, für die Schneidkante, andererseits wird offenbar der gebildete Span bei der Abnahme vom Werkstück gestaucht und unmittelbar danach beim Einlauf in die Spanmulde an der vom Werkzeug entfernt liegenden Oberfläche gestreckt und dabei in kurze Teilstücke gebrochen. Im Bereich der unstrukturierten Spanfläche an der Nebenschneide können die dort vom Werkstück abgenommenen höchst feinen Spänen mit den gebrochenen gröberen Spänen, die an der Hauptschneide gebildet werden, ungehindert ausgebracht werden. Derart kann mit einer Reibahle nach der Erfindung auch bei erhöhtem Spananfall einer Ansammlung von Spänen im Bereich der Nebenschneide entgegengewirkt werden, was zu Verbesserungen der Oberfläche eine Bohrung und zur Steigerung der Werkzeugstandzeit führt.

Nach einer bevorzugten Ausführungsform der Erfindung, bei welcher eine besonders ausgeprägte und gleichmäßige Oberflächengüte der durch Feinbearbeitung mittels Reiben bearbeiteten Bohrung erreicht werden kann, weist die Schneidplatte einen Anschnitt mit mindestens einer Schneidkante mit einem Winkel von 10° bis 80° zur Schaftlängsachse mit einer Länge von höchstens 4 mm auf, wobei der Übergang der Hauptschneidkante in den achsparallelen Nebenkantenbereich stufenweise bzw. polygonal oder gerundet gebildet ist.

In Weiterbildung der Erfindung kann insbesondere für langspanende Werkstoffe von Vorteil sein, wenn der Anschnitt der Schneidplatte mindestens zwei Hauptschneidkanten mit unterschiedlichen Winkeln zur Schaftachse besitzt und dass die Spanmulde in der Spanfläche der Schneidplatte senkrecht zu den Hauptschneidkanten jeweils eine unterschiedliche Breite aufweist, wobei vorzugsweise im Bereich des Überganges der Schneidkanten im Anschnitt die Spanmuldenbreite stellenweise verringert, insbesondere auf einen Wert von kleiner als 0,15 mm verringert ist.

Eine Ausführung der Schneidplatte mit einer Hauptschneidkante in zwei Teilen mit unterschiedlichen Winkeln zur Schaftachse induziert im ablaufenden Span eine überlagerte Spannung in Achsrichtung und fördert eine Bildung von kleinen Spänen. Die vorteilhaft den Spanbruch unterstützende Wirkung einer unterschiedlichen Breite der Spanmulde ist wissenschaftlich noch nicht vollkommen geklärt, dürfte jedoch in einem Induzieren einer weiteren Spannung im Span abgenommen von einer Hauptschneide liegen.

Wenn, wie erfindungsgemäß vorgesehen ist, die Schneidplatte eine Spanmulde besitzt, die ab einem Abstand von mindestens 0,02 mm von der Hauptschneidkante entfernt, senkrecht zu dieser keilförmig in die Spanfläche vertieft ausgebildet ist und die Oberfläche der Mulde, die gegebenenfalls eine erhöhte Rautiefe besitzt, andererseits gerundet, vorzugsweise mit einem Radius von ca. 0,05 mm gerundet, in die Spanfläche rückgeführt ist, so sind besonders kurze Spanlängen mit hoher Sicherheit im Bereich des Anschnittes erreichbar. Der Span läuft dabei vom Werkstück auf die Spanfläche der Schneidplatte ab und wird im Außenbereich gestaucht. Beim Übergang zur Spanmulde erfolgt insbesondere durch die Keilform derselben eine Biegung des Spanes in Gegenrichtung zur Mulde hin, wobei dabei entstehende Zugspannungen schon zum Spanbruch führen können. Mit Sicherheit bewirkt letztlich eine erhöhte Rautiefe der Spanmuldenoberfläche oder eine gerundete Rückführung derselben in die Spanfläche einen Spanbruch in Kleinteile.

Es hat sich im Hinblick auf eine spanbrechende Funktion und auf eine Vermeidung von Brüchen der Schneidplatte sowie einer Steigerung der Verwendbarkeit der Reibahle als vorteilhaft gezeigt, wenn die Spanmulde(n) eine größte Tiefe von größer 0,03 mm, jedoch kleiner als 0,16 mm, aufweist die Muldenoberfläche(n) gegebenenfalls eine Strukturierung besitzt (besitzen).

Im Folgenden wird die Erfindung anhand von lediglich einen Ausführungsweg darstellenden Zeichnungen näher erläutert.

Es zeigt
- Fig. 1: eine Draufsicht auf eine Wendeschneidplatte;
- Fig. 2: die Wendeschneidplatte nach Fig. 1 im Kreuzriss;
- Fig. 3: der Bereich A der Wendeschneidplatte von Fig. 1 in vergrößerter Darstellung;
- Fig. 4: ein Schnitt im Anschnitt im Bereich CC von Fig. 3 der Wendeschneidplatte gem. Fig.3;
- Fig. 5: ein Schnitt im Anschnitt im Bereich BB der Wendeschneidplatte gem. Fig. 3.

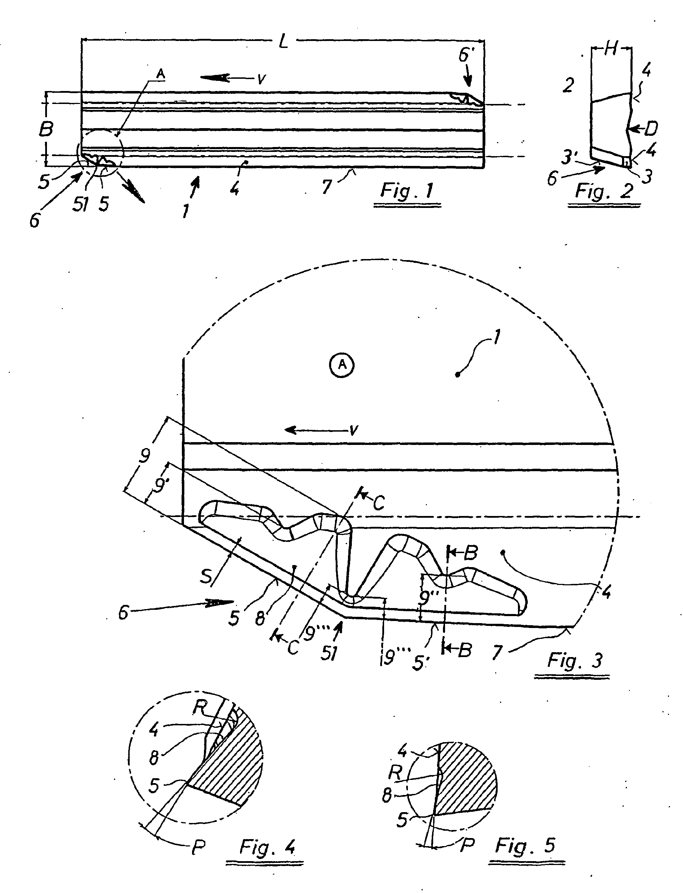

In Fig. 1 und Fig. 2 ist eine Wendeschneidplatte für einen Einsatz in einer Reibahle im Grundriss und Kreuzriss dargestellt. Die Wendeschneidplatte **1** weist beispielsweise eine Länge **L** von 16,5 mm, eine Breite **B** von 3,6 mm und eine Dicke **H** von 2 mm auf und besitzt an gegenüberliegenden Ecken Anschnitte **6, 6'.** In einem Anschnitt **6** kann eine Hauptschneidkante aus zwei Schneidkantenteilen **5, 5'** gebildet sein, welche einen Übergang **51** aufweisen. In Gegenrichtung zu einer dargestellten Vorschubrichtung **V** einer Reibahle bzw. in Fortsetzung der Hauptschneidkante(n) **5, 5'** ist eine Nebenschneidkante **7** ausgeformt.

Fig. 2 zeigt eine Wendeschneidplatte **1** im Kreuzriss mit einer Auflagefläche **2** für einen Sitz im Arbeitsbereich einer Reibahle. Freiflächen **3, 3'** und Spanfläche **4** bilden jeweils Hauptschneidkanten **5, 5'** und eine Nebenschneidkante **7.**

Ein Anschnitt **6** einer Schneidplatte **1** ist in Fig. 3 dargestellt. Dieser Anschnitt **6** weist eine Hauptschneidkante **5** mit einem größeren Winkel und eine Hauptschneidkante **5'** mit einem spitzeren Winkel zur Schaftlängsachse auf, wobei eine daran anschließende Nebenschneidkante **7** im Wesentlichen achsparallel verläuft. Erfindungsgemäß ist auf oder in der die Schneidkanten **5, 5', 7** bildenden Spanfläche **4** nur im Bereich eines Anschnittes **6,** also nur im Bereich einer oder mehrerer Hauptschneidkante(n) **5, 5',** eine Fläche mit vergrößerter Rautiefe (nicht dargestellt) oder einer Spanmulde **8** vorgesehen. Eine erhöhte Flächenrauhigkeit oder eine Spanmulde **8** der oder in der Spanfläche **4** beginnt erst in einem Abstand **S** von der Hauptsclineidkante **5, 5',** was eine verbesserte Haltbarkeit derselben und eine Kurzspanbildung begünstigt. Ein Übergang **51** von einer vorderen Hauptschneide **5** in eine nachfolgende Hauptschneide **5'** sowie in eine anschließende Nebenschneide **7** kann kantig, polygonal oder gerundet ausgeführt sein.

In einer bevorzugten Ausführungsform ist eine von einer Schneidkante **5, 5'** beabstandete Spanmulde **8** sich keilförmig vertiefend mit einem Winkel **P** in die Spanfläche **4** eingesenkt und besitzt jeweils unterschiedliche Breiten **9, 9' ,9" ,9"'.** Wie auch in Fig. 4 für einen Schnitt **CC** eines Bereiches und in Fig. 5 für einen Schnitt **BB** eines weiteren Bereiches vom Anschnitt **6** dargestellt ist, wird die Oberfläche der Spanmulde **8** mit unterschiedlichem Normalabstand **9, 9' ,9"** jeweils von einer Hauptschneidkante **5, 5'** in die Spanfläche **4** rückgeführt.

Im Übergangsbereich **51** der Hauptschneidkanten **5, 5'** ist in schmaler Ausgestaltung eine geringe Breite **9"'** der Spanmulde **8** ausgebildet und es wird dadurch, wie vorher dargelegt, ein Brechen der im Anschnittbereich **6** abgenommenen Späne wesentlich unterstützt.

## Patentansprüche

1. Reibahle, bestehend aus einem Schaft mit einerseits einem Einspannteil und in Achsrichtung desselben gegenüberliegend einen Arbeitsbereich mit mindestens einem auswechselbaren Werkzeugteil und mindestens einem dieses festlegenden Druckkörper, wobei das Werkzeugteil als Hartmetall-Schneidplatte (1) mit einer Länge (L) von bis zu 25 mm, mit einer Breite (B) von bis zu 8 mm und einer Höhe bzw. Dicke (H) von bis zu etwa 4 mm insbesondere als Wendeschneidplatte gebildet ist, welche Schneidplatte (1) in Längsrichtung im Querschnitt ein Profil mit einer ebenen Auflagefläche (2), jeweils einer zumindest eine Hauptschneidkante (5, 5') und eine Nebenschneide (7) bildenden Freifläche (3, 3'), einer Spanfläche (4) und einer im Wesentlichen konkaven Druckfläche (D) für ein Spannelement aufweist, und in Draufsicht eine zur Spanung einsetzbare im Wesentlichen parallel zur Schaftachse ausrichtbare Nebenschneidkante (7), die in Vorschubrichtung (V) der Reibahle endenseitig einen zur Schaftachse gewinkelten Anschnitt (6) mit mindestens einer Hauptschneidkante (5, 5') besitzt, **dadurch gekennzeichnet, dass** die Spanfläche (4) der Schneidplatte (1) in einem Abstand (S) von mindestens 0,02 mm von der Schneidkante (5, 5') endenseitig im Bereich vom Anschnitt (6) zumindest teilweise eine um mindestens 0,01 mm vergrößerte Rautiefe aufweist.

2. Reibahle, bestehend aus einem Schaft mit einerseits einem Einspannteil und in Achsrichtung desselben gegenüberliegend einen Arbeitsbereich mit mindestens einem auswechselbaren Werkzeugteil und mindestens einem dieses festlegenden Druckkörper, wobei das Werkzeugteil als Hartmetall-Schneidplatte (1) mit einer Länge (L) von bis zu 25 mm, mit einer Breite (B) von bis zu 8 mm und einer Höhe bzw. Dicke (H) von bis zu etwa 4 mm insbesondere als Wendeschneidplatte gebildet ist, welche Schneidplatte (1) in Längsrichtung im Querschnitt ein Profil mit einer ebenen Auflagefläche (2), jeweils einer zumindest eine Hauptschneidkante (5, 5') und eine Nebenschneide (7) bildenden Freifläche (3, 3'), einer Spanfläche (4) und einer im Wesentlichen konkaven Druckfläche (D) für ein Spannelement aufweist, und in Draufsicht eine zur Spanung einsetzbare im Wesentlichen parallel zur Schaftachse ausrichtbare Nebenschneidkante (7), die in Vorschubrichtung (V) der Reibahle endenseitig einen zur Schaftachse gewinkelten Anschnitt (6) mit mindestens einer Hauptschneide (5, 5') besitzt, **dadurch gekennzeichnet, dass** die Schneidplatte (1) in deren Spanfläche (4) in einem Abstand von mindestens 0,02 mm von der Hauptschneidkante (5) endenseitig im Bereich vom Anschnitt (6) zumindest eine Spanmulde (8) aufweist.

3. Reibahle nach Anspruch 2, **dadurch gekennzeichnet, dass** die Schneidplatte einen Anschnitt (6) mit mindestens einer Schneidkante (5) mit einem Winkel von 10° bis 80° zur Schaftlängsachse mit einer Länge von höchstens 4 mm besitzt und der Übergang der Hauptschneidkante (5) in den achsparallelen Nebenkantenbereich (7) stufenweise bzw. polygonal oder gerundet gebildet ist.

4. Reibahle nach Anspruch 2 oder 3, **dadurch gekennzeichnet, dass** der Anschnitt (6) der Schneidplatte (1) mindestens zwei Hauptschneidkanten (5, 5') mit unterschiedlichen Winkeln zur Schaftachse besitzt und dass die Spanmulde (8) in der Spanfläche (4) der Schneidplatte (1) senkrecht zu den Hauptschneidkanten (5, 5') jeweils eine unterschiedliche Breite (9, 9' ,9" ,9"') aufweist, wobei vorzugsweise im Bereich des Überganges (51) der Schneidkanten (5, 5') im Anschnitt (6) die Spanmuldenbreite (9"') stellenweise verringert, insbesondere auf einen Wert von kleiner 0,15 mm verringert ist.

5. Reibahle nach einem der Ansprüche 2 bis 4, **dadurch gekennzeichnet, dass** die Schneidplatte (1) eine Spanmulde (8) besitzt, die ab einem Abstand von mindestens 0,04 mm von der Hauptschneidkante (5, 5') entfernt, senkrecht zu dieser keilförmig vertieft ausgebildet ist und die Oberfläche der Mulde (8), die gegebenenfalls eine erhöhte Rautiefe besitzt, andererseits gerundet, vorzugsweise mit einem Radius (R) von ca. 0,05 mm gerundet, in die Spanfläche (4) rückgeführt ist.

6. Reibahle nach einem der Ansprüche 2 bis 5, **dadurch gekennzeichnet, dass** die Spanmulde(n) (8) eine größte Tiefe von größer 0,03 mm, jedoch kleiner als 0,16 mm, aufweist, wobei die Muldenoberfläche(n) gegebenenfalls eine Strukturierung besitzt (besitzen).

## Claims

1. Reamer, comprising a shaft with a traction part and, opposite in the axial direction thereof, a working area with at least one interchangeable tool part and at least one pressure body that is fixating the tool part, whereby the tool part is embodied as a hard metal cutting plate (1) with a length (L) of up to 25 mm, a width (B) of up to 8 mm and a height or thickness (H) of up to approximately 4 mm, designed in particular as an indexable insert, wherein the cutting plate (1) in the longitudinal cross-section has a profile with a flat support surface (2), a tool flank (3,3'), forming at least one main cutting edge (5,5') and one auxiliary cutting edge (7), respectively, a chip-bearing surface (4) and an essentially concave bearing surface area (D) for a clamping element, and, in the top view, an auxiliary cutting edge (7), that is insertable for the cutting process and is adjustable essentially parallel to the shaft axis, and which has a starting cut (6) that is angled toward the shaft axis in the feed direction (V) of the reamer at its ends with at least one main cutting edge (5,5'), **characterized in that** the chip-bearing surface (4) of the cutting plate (1) is arranged at a distance (S) of at least 0.02 mm from the cutting edge (5.5') at its end in the area of the starting cut (6) has, at least partially, a roughness depth increased by at least 0.01 mm.

2. Reamer, comprising a shaft with a traction part and, opposite in the axial direction thereof, a working area with at least one interchangeable tool part and at least one pressure body that is fixating the tool part, whereby the tool part is embodied as a hard metal cutting plate (1) with a length (L) of up to 25 mm, a width (B) of up to 8 mm and a height or thickness (H) of up to approximately 4 mm, designed in particular as an indexable insert, wherein the cutting plate (1) in the longitudinal cross-section has a profile with a flat support surface (2), a tool flank (3,3'), forming at least one main cutting edge (5,5') and one auxiliary cutting edge (7), respectively, a chip-bearing surface (4) and an essentially concave bearing surface area (D) for a clamping element, and, in the top view, an auxiliary cutting edge (7), that is insertable for the cutting process and is adjustable essentially parallel to the shaft axis, and which has a starting cut (6) that is angled toward the shaft axis in the feed direction (V) of the reamer at its ends with at least one main cutting edge (5,5'), **characterized in that** the cutting plate (1) has at least one chip cavity (8) in its chip-bearing surface (4) arranged at a distance of at least 0.02 mm from the main cutting edge (5) at its end in the area of the starting cut (6).

3. Reamer according to Claim 2, **characterized in that** the cutting plate has a starting cut (6) with at least one cutting edge (5) at an angle of 10° to 80° to the shaft's longitudinal axis with a maximum length of 4 mm and the transition of the main cutting edge (5) into the axially parallel auxiliary cutting edge area (7) is carried out stepped, polygonally or rounded.

4. Reamer according to Claim 2 or 3, **characterized in that** the starting cut (6) of the cutting plate (1) has at least two main cutting edges (5,5') at different angles to the shaft axis and that the chip cavity (8) in the chip-bearing surface (4) of the cutting plate (1) perpendicular to the main cutting edges (5,5') has different widths (9, 9', 9", 9"'), respectively, whereby preferably in the area of the transition (51) of the cutting edges (5,5') in the starting cut (6), the chip cavity width (9"') is reduced in places, in particular to a value of less than 0.15 mm.

5. Reamer according to Claims 2 to 4, **characterized in that** the cutting plate (1) has a chip cavity (8), that is arranged at a distance of at least 0.04 mm from the main cutting edge (5,5'), is recessed with a wedge shape perpendicular to the cutting edge (5,5') and that the surface of the cavity (8) that has an increased roughness depth, where applicable, is otherwise rounded, preferably rounded with a radius (R) of approximately 0.05 mm, is returned into the chip-bearing surface (4).

6. Reamer according to Claims 2 to 5, **characterized in that** the chip cavity(ies) has (have) a maximum depth of greater than 0.03 mm but less than 0.16 mm, whereby the cavity surface(s) is/are structured, where applicable.

## Revendications

1. Alésoir constitué d'une tige avec d'un côté une partie de serrage et dans la direction axiale à l'opposé de celle-ci une zone de travail avec au moins une partie d'outil interchangeable et au moins un corps de pression fixant celle-ci, dans lequel la partie d'outil est formée en tant que matrice de découpage en métal dur (1) avec une longueur (L) allant jusqu'à 25 mm, avec une largeur (B) allant jusqu'à 8 mm et une hauteur ou épaisseur (H) allant jusqu'à environ 4 mm, notamment en tant que matrice de découpage tournante, laquelle matrice de découpage (1) présente dans la direction longitudinale en coupe transversale un profil avec une surface d'appui plane (2), à chaque fois une face de dépouille (3, 3') formant au moins une arête de coupe principale (5, 5') et une lame secondaire (7), une surface d'attaque (4) et une surface de pression essentiellement concave (D) pour un élément de serrage, et en vue de dessus une arête de coupe secondaire (7) pouvant être insérée pour la coupe, pouvant être orientée essentiellement parallèlement à l'axe de tige qui possède dans le sens d'avance (V) de l'alésoir du côté des extrémités une entamure coudée (6) vers l'axe de tige avec au moins une arête de coupe principale (5, 5'), **caractérisé en ce que** la surface d'attaque (4) de la matrice de découpage (1) présente à un écart (S) d'au moins 0,02 mm de l'arête de coupe (5, 5') du côté des extrémités dans la région de l'entamure (6) au moins partiellement une profondeur de rugosité agrandie d'au moins 0,01 mm.

2. Alésoir constitué d'une tige avec d'un côté une partie de serrage et dans la direction axiale à l'opposé de celle-ci une zone de travail avec au moins une partie d'outil interchangeable et au moins un corps de pression fixant celle-ci, dans lequel la partie d'outil est formée en tant que matrice de découpage en métal dur (1) avec une longueur (L) allant jusqu'à 25 mm, avec une largeur (B) allant jusqu'à 8 mm et une hauteur ou épaisseur (H) allant jusqu'à environ 4 mm, notamment en tant que matrice de découpage tournante, laquelle matrice de découpage (1) présente dans la direction longitudinale en coupe transversale un profil avec une surface d'appui plane (2), à chaque fois une face de dépouille (3, 3') formant au moins une arête de coupe principale (5, 5') et une lame secondaire (7), une surface d'attaque (4) et une surface de pression essentiellement concave (D) pour un élément de serrage, et en vue de dessus une arête de coupe secondaire (7) pouvant être insérée pour la coupe, pouvant être orientée essentiellement parallèlement à l'axe de tige qui possède dans le sens d'avance (V) de l'alésoir du côté des extrémités une entamure coudée (6) vers l'axe de tige avec au moins une lame principale (5, 5'), **caractérisé en ce que** la matrice de découpage (1) présente dans sa surface d'attaque (4) à un écart d'au moins 0,02 mm de l'arête de coupe principale (5) du côté des extrémités dans la région de l'entamure (6) au moins un moule d'enlèvement (8).

3. Alésoir selon la revendication 2, **caractérisé en ce que** la matrice de découpage possède une entamure (6) avec au moins une arête de coupe (5) avec un angle de 10° à 80° par rapport à l'axe longitudinal de tige avec une longueur de 4 mm maximum et la transition de la lame de coupe principale (5) dans la région de lame secondaire parallèle à l'axe (7) est formée par étapes ou de manière polygonale ou arrondie.

4. Alésoir selon la revendication 2 ou 3, **caractérisé en ce que** l'entamure (6) de la matrice de découpage (1) possède au moins deux arêtes de coupe principales (5, 5') avec différents angles par rapport à l'axe de tige et que le moule d'enlèvement (8) présente dans la surface d'attaque (4) de la matrice de découpage (1) perpendiculairement aux arêtes de coupe principales (5, 5') à chaque fois une largeur différente (9, 9', 9", 9"'), dans lequel la largeur de moule d'enlèvement (9"') est réduite par endroits de préférence dans la région de la transition (51) des arêtes de coupe (5, 5') dans l'entamure (6), notamment est réduite à une valeur inférieure à 0,15 mm.

5. Alésoir selon l'une quelconque des revendications 2 à 4, **caractérisé en ce que** la matrice de découpage (1) possède un moule d'enlèvement (8) qui est réalisé éloigné à partir d'un écart d'au moins 0,04 mm de l'arête de coupe principale (5, 5'), de manière renfoncée en forme de coin perpendiculairement à celle-ci et la surface du moule (8) qui possède éventuellement une profondeur de rugosité accrue est renvoyée de l'autre côté de manière arrondie, de préférence arrondie avec un rayon (R) d'environ 0,05 mm, dans la surface d'attaque (4).

6. Alésoir selon l'une quelconque des revendications 2 à 5, **caractérisé en ce que** le(s) moule(s) d'enlèvement (8) présente(nt) une profondeur maximale supérieure à 0,03 mm mais inférieure à 0,16 mm, dans lequel la/les surface(s) de moule possède(nt) éventuellement une structuration.
